# DEMANDE DE BREVET EUROPEEN

(11) **EP 1 236 392 A1**
(43) Date de publication de la demande: **04.09.2002**
(21) Numéro de dépôt: 02358002.0
(22) Date de dépôt: 28.02.2002
(51) Int. Cl.: A01G 3/04

(54) **Taille-haie**

(30) Priorité: 02.03.2001 FR 0102855
(71) Demandeur: Lebrun, Guy, 13109 Simiane Collongue (FR)
(72) Inventeur: Lebrun, Guy, 13109 Simiane Collongue (FR)

(57) **Abrégé**

Le taille-haie à moteur autonome et à barre de lames se caractérise en ce qu'il est constitué par un dispositif de coupe (1) sur la figure 3, composée d'une barre de lames, et porté par un bras articulé (2), reposant lui-même sur un châssis adapté à être posé sur un tracteur, une tondeuse, ou tout autre véhicule auto-portée.

Ce dispositif alimenté par un moteur indépendant (3), effectue un travail de coupe franche, appelé à trancher avec netteté la fibre des plantes trouvées sur son passage, sans la broyer à la manière des systèmes de coupe existant actuellement dans le domaine de la technique de l'élagage et de la taille de haies sur support auto-portée.

## Description

L'objet du présent développement est d'une part de revendiquer le droit de priorité attribué à l'invention déposée le 02 mars 2001 auprès de l'Institut National de la Propriété Industrielle français, portant la référence 01 022855, et d'autre part d'exposer les caractéristiques constitutives de l'invention destinée à être protégée par un brevet européen.

La présente invention concerne un taille-haie mécanisé.

Jusqu'à présent, aucun système ne permettait un travail de taille à partir d'un micro-tracteur ou d'une tondeuse auto-portée. Par son autonomie de fonctionnement et sa miniaturisation, le dispositif soumis à examen est susceptible d'être installé sur toutes sortes de machines auto-portées.

En outre, la technique actuelle fait état en matière d'élagage et de taille-haies de machines répondant soit au principe des épareuses hydrauliques, soit à celui de scies circulaires, de nature l'un et l'autre à broyer les obstacles rencontrés sans effectuer de coupe franche permettant un travail en finesse.
Les dispositifs existant jusqu'à présent, parce qu'ils n'utilisent pas de barre de lames, ne sont ainsi pas adaptés aux haies des citadins ou aux paysagistes pour petite surface.

Il convient ainsi de préciser que l'invention faisant l'objet de nos revendications, n'a pas vocation à élaguer des arbres ou effectuer un travail de débroussaillage massif comme la technique actuelle sait le faire, mais est vouée exclusivement à la taille de haies de jardins dont le diamètre des plantes ne peut excéder 2 à 3 centimètres.

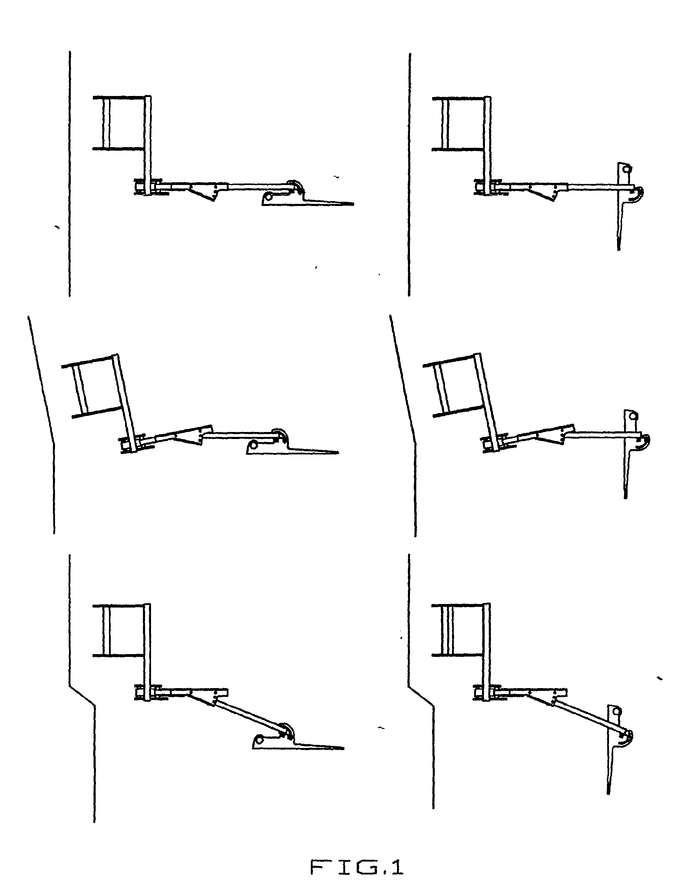

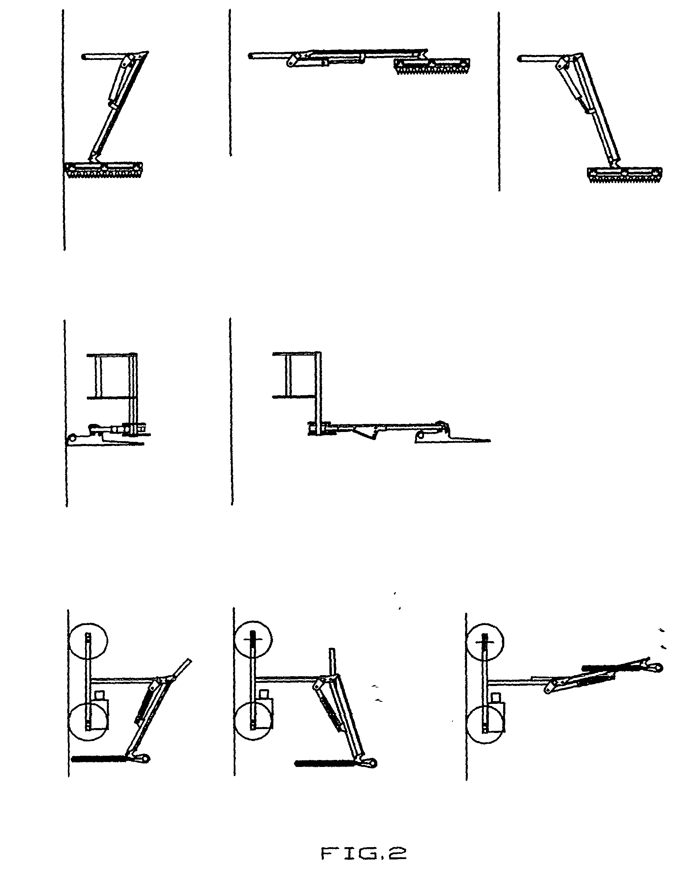

La présente invention permet la coupe de haies de 20 centimètres à 3 mètres de hauteur.
Le diamètre des branches peut atteindre 2 centimètres en bois tendre et 1 centimètre environ pour les bois durs.
La taille se fait soit sur le plan vertical, soit sur le plan horizontal, comme l'indique la figure 1.

Par son système de barre de lames, la coupe est parfaite tant en hauteur qu'en profondeur. Le réglage et la pose sont simples et ne réclament aucune technicité.

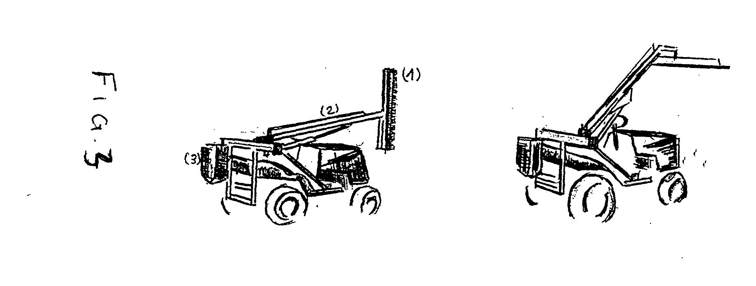

A titre d'exemple, la figure 2 montre la présente invention en position normale, en position en dévers ( réglage angle 11° ou 22° ) et en position avec talus ou muret intercalé ( réglage angle à 11° ou 22 ° ).

L'élévation du bras et le réglage de la coupe peuvent être manuels ou hydrauliques.
Il est possible d'utiliser tout autre système ayant des fonctions similaires sans que cela ne modifie la nature et la fonction de la présente invention.
Il fonctionne soit manuellement, soit à partir du poste de commande fixé soit posé sur le micro- tracteur, ou sur la tondeuse auto-portée.

Il se fixe soit à l'arrière d'un micro-tracteur, d'un tracteur, d'une tondeuse auto-portée, ou d'une remorque ; dans ce cas, nous conseillons de fixer les barres porteuses au milieu des traverses ou sur une remorque pré-équipée.
On peut également le fixer sur tout autre support.
Il peut recevoir toutes sortes de moteurs, à essence, hydraulique ou électrique, une plate forme est prévue à cet effet.
Sa fabrication peut être en acier, en aluminium, fibre de carbone, plastique, ou encore en tout autres matériaux connus ou inconnus à ce jour.

Afin d'établir les revendications, il convient de mettre en évidence les caractéristiques principales de l'invention qui, assemblées les unes aux autres, constituent la nouveauté de cette machine au regard de l'état actuel de la technique dans le domaine de la taille de haies.

### Le système de coupe et la nature de son travail:

Les systèmes de coupe existant sur le marché de l'élagage et de la taille de haies effectués de manière auto-portées ( et donc non manuels) se caractérisent soit par des lamiers destinés à la coupe des arbres prenant la forme de scies circulaires, soit par des épareuses composées de retords qui animent des cuillères.

Des procédés qui déchiquètent le bois, et lassèrent la fibre des plantes plutôt que d'apporter une coupe franche propre à tailler à la manière d'un couteau.

La nouveauté apportée par la présente invention au niveau de la coupe réside dans l'installation à l'extrémité du bras articulé de la machine d'une barre de lames de faucheuse, dont le mouvement oscillant des lames, entraîné par un moteur hydraulique, assure une taille verticale ou horizontale. Ce dispositif est appelé à trancher avec netteté la fibre des plantes trouvées sur son passage, sans la broyer à la manière des systèmes de coupe existant actuellement dans le domaine de l'élagage et de la taille de haies auto-portée.
Un travail que l'on peut qualifier de « fin » en comparaison avec ceux fournis par les machines existantes, et destiné aux haies de jardins.

### L'Autonomie de la machine :

L'état actuel de la technique en matière de machine à élaguer et tailler les haies se caractérisent unanimement par une dépendance totale de leur système d'alimentation à la puissance du tracteur ou microtracteur qui les supportent.

Le dispositif technique soumis à l'examen de brevetabilité présente la nouveauté d'être adaptable à toutes sortes de machines auto-portées.

Les tondeuses à gazon, les remorques, les tracteurs, ou encore les quads, peuvent ainsi servir de support au taille haies qui, mu par un moteur indépendant, assure son propre fonctionnement.
Une autonomie qui lui permet de s'intégrer à tout type de machines automotrices présentant un mouvement relativement lent de manière à permette un travail en continu.

Ce système parfaitement autonome, se caractérise par un moteur thermique qui entraîne une pompe hydraulique, qui elle-même alimente un moteur hydraulique en tête de la barre de lames de coupe.

Par son indépendance vis à vis du moteur de la machine sur laquelle il est installé, ce système de coupe se distingue de tous les dispositifs techniques existants jusqu'à présent qui utilisent, quant à eux, la force du tracteur qui les intègre.

## Revendications

1. La présente invention constitue un dispositif de taille-haies à moteur **caractérisé en ce qu'**il est constitué par un dispositif de coupe porté par un bras articulé, reposant lui-même sur un châssis adapté à être posé sur un tracteur, une tondeuse, ou tout autre véhicule auto-portée.

2. Dispositif selon revendication 1 **caractérisé par** un châssis supportant un bras dont la longueur et l'amplitude permettent un travail de coupe de 0 à 3 mètres.

3. Capacité de fonctionnement autonome de la machine, rendu possible par la puissance dégagée par son moteur indépendant qui entraîne une pompe hydraulique, qui elle-même alimente un moteur hydraulique en tête de la barre de lames de coupe.

4. Apposition à l'extrémité du bras articulé de la machine d'une barre de lames, composée soit de deux lames complémentaires, soit d'une lame simple munie de sa contre lame, et animée par un moteur hydraulique.

5. Adaptabilité totale du taille- haie rendue possible par son autonomie et sa miniaturisation, permettant lorsque la machine qui le supporte dispose d'un ralenti suffisamment lent, d'effectuer un travail en continu parallèlement à la haie.
